# EUROPEAN PATENT SPECIFICATION

(11) **EP 0 785 687 B1**
(45) Date of publication and mention of the grant of the patent: **20.10.1999**
(21) Application number: 97103840.1
(22) Date of filing: 05.05.1993
(51) Int. Cl.: H04N 7/16, H04N 7/22

(54) **Picture image distributing apparatus provided within passenger moving vehicle**
Bildverteilungsanlage in einem Fahrzeug mit Insassen
Appareil pour la distribution d'images dans un véhicule transportant des passagers

(30) Priority: 08.05.1992 JP 11631792
(43) Date of publication of application: 23.07.1997
(62) Divisional of application: 93303483.7
(73) Proprietor: MATSUSHITA ELECTRIC INDUSTRIAL CO., LTD., Kadoma-shi, Osaka-fu (JP)
(72) Inventor: Utsumi, Kuniaki, Sanda-shi, Hyogo-ken (JP); Nakata, Hiroaki, Hirakata-shi, Osaka-fu (JP); Morikura, Susumu, Hirakata-shi, Osaka-fu (JP); Yamamoto, Hiroaki, Higashiosaka-shi, Osaka-fu (JP); Maeda, Kazuki, Sakai-shi, Osaka-fu (JP); Fuse, Masaru, Toyonaka-shi, Osaka-fu (JP)
(74) Representative: Rackham, Stephen Neil

(56) References cited:
- EP-A- 0 279 608
- FR-A- 2 652 701
- CABLE TV SESSIONS, MONTREUX, JUNE 13 - 18, 1991, no. SYMP. 17, 14 June 1991, CCITT, pages 579-594, XP000260062 STEFFENSEN H ET AL: "FIBRE TO THE HOME - AN SCM FIELD TRIAL FOR RURAL AREAS"

## Description

The present invention generally relates to a picture image distributing apparatus provided within a passenger moving vehicle for distributing to the respective passenger seats the multichannel picture image signals within the passenger moving vehicle.

The conventional picture image distributing apparatus provided within a passenger moving vehicle is one using the same coaxial cables as in, for example, CATV. The distributing operation of the signals is effected by the taking out operation of the signals where necessary by a tapping system from the coaxial cable.

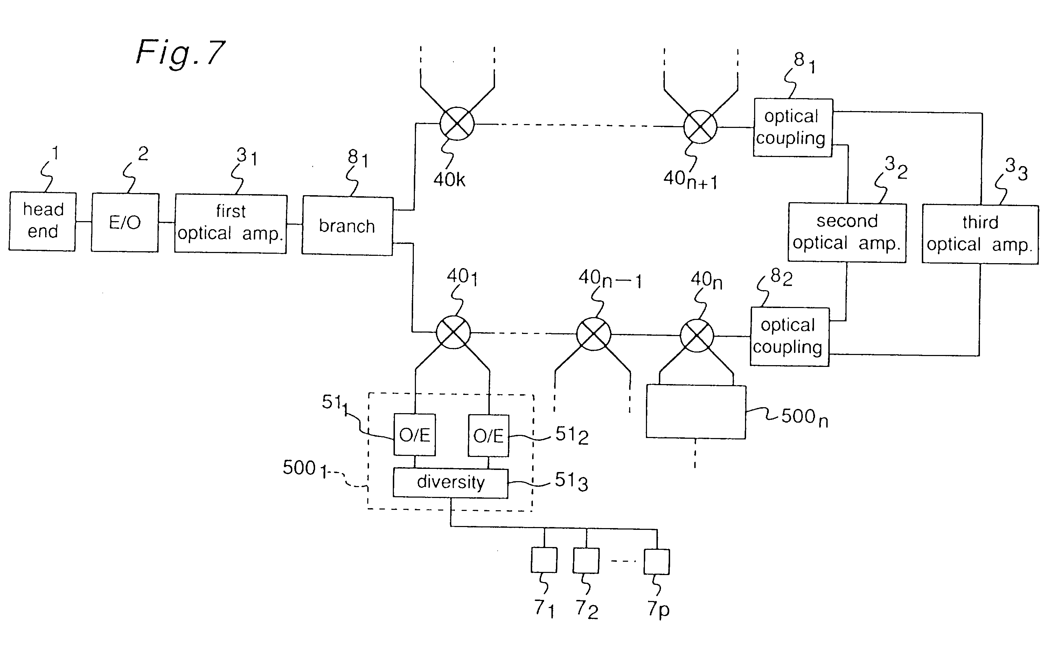

A network construction of distributing optical signals with the use of optical fibers generally uses topology of a star type using an optical branching unit of such equal distribution as shown in Fig. 7 (A), of a double star type or of a multistage star type as in Fig. 7 (B). This is because the loss as the whole network which becomes a problem in the optical signal distribution can be reduced as much as possible as the optical branching unit of the equal distribution is the least in the excessive loss. Therefore, the number of all the distributions can be made as many as possible.

As to the prior art disclosing a signal distribution of optical fiber there is, for instance, a paper of "OPTICAL AMPLIFIERS FOR VIDEO DISTRIBUTION" written by D. R. HUBER and J. B. GLAAB, and issued on INTERNATIONAL JOURNAL OF DIGITAL AND ANALOG COMMUNICATION SYSTEMS, VOL. 3, pp. 333 - 339, (1990).

In a picture image distributing apparatus provided within a passenger moving vehicle by a tapping system using such coaxial cables as in the above description, electromagnetic interferences are easy to, not only, receive from the electromagnetic environment inferior within the passenger moving vehicle, but also, to generate the electromagnetic interferences with respect to the other appliances, with a problem that the influences upon the signals by differences and variations in the earth electric potential are unavoidable.

In order to avoid such electromagnetic task, it is effective to use the optical fibers as a transmission path. In the network construction of a star type or a multistage star type, the number of the core wires of the optical fibers to be laid in the longitudinal direction becomes more within the passenger moving vehicle of such narrow construction as airplane or train, and especially becomes more near the head end portion. Generally, the passenger moving vehicle of such a narrow construction as the airplane and the train is narrow therein in the conduit lines for the transmission path use or in the space for them, with a large problem that the optical fibers of many cores are laid. Weight increases, and wirings become complicated. There is a problem that it takes more time to detect the trouble locations at the breaks of the optical fibers. Although the optical fibers are required to be connected with the optical connectors so as to be disengaged halfway from on the transmission path for the maintenance, the number of the optical connections become extremely numerous, and the space for them become larger. When the optical fibers are connected again after the disconnection thereof, with a problem that the discrimination among the optical fibers is hard to effect.

The invention defined in claim 1 is directed to a picture image distributing apparatus provided within a passenger moving vehicle comprising a head end portion related to picture image signals and outputting electric signals multiplexed in frequency, an electric optical converting portion for converting into optical signals the electric signals of the head end portion, a first optical amplifying portion for optically amplifying the optical signals from the electric optical converting portion, a branching portion for branching in two the optical output of the first optical amplifying portion, two lines of optical fiber transmission paths, a first transmission path and a second transmission path, connected in series with a plurality of optical branching units of fusion type having two inputs and two outputs of non-equal distribution for halfway branching one portion of optical power of the optical signals, a second optical amplifying portion for optically amplifying the optical output from the final point of the first transmission path to input into the final point of the second transmission path, a third optical amplifying portion for optically amplifying the output from the final point of the second transmission path to input into the final point of the first transmission path, a plurality of optical electric converting portion for receiving two optical signals from the two outputs from the optical branching units of fusion type to convert into electric signals as received in diversity, and passenger seat picture image receiving terminals for receiving the electric signals from the optical electric converting portion.

In the present invention, the head end portion is related to picture image signals and outputs electric signals multiplexed in frequency: the electric optical converting portion optically amplifies the electric signals from the head end portion: the first optical amplifying portion optically amplifies the optical signals from the electric optical converting portion: the branching portion branches in two the optical output from the optical amplifying portion: the first and second optical fiber transmission paths are respectively connected with two branching portions to transmit the optical signals from the two branching portions, and connected in series with a plurality of optical branching units of fusion type having two inputs and two outputs of non-equal distribution for halfway branching one portion of the optical power of the optical signals: the second optical amplifying portion optically amplifies the optical outputs from the final point of the first optical transmission path to input into the final point of the second transmission path: the third optical amplifying portion optically amplifies the outputs from the final point of the second transmission path to input into the final point of the first transmission path: the plurality of optical electric converting portions receive two optical signals from two outputs of the optical branching units to convert into electric signals as received in diversity: the passenger seat picture image receiving terminals are connected respectively in plural with the respective optical electric converting portions to receive the electric signals from the optical electric converting portion.

Another embodiment of the invention is defined by the features of claim 2.

In the present invention, the picture image signals of a multichannel can be distributed to the respective passenger seats efficiently within the passenger moving vehicle of such narrow construction as in the airplane and the train. Therefore, the less number of the optical connectors for maintenance use will do, the type of the branching units can be reduced, the wiring amount can be also reduced, thus resulting in lighter amount. Further, the signal distribution can be effected in much more amount. As the number of the optical connectors and the type of the branching units can be reduced, thus resulting in lower cost. Higher reliability, easier maintenance and repairs are provided.

Particular embodiments of the present invention will now be described with reference to the accompanying drawings, in which:-
Fig. 1 is a block diagram showing the construction of a picture image distributing apparatus provided within a passenger moving vehicle in a first example;
Fig. 2 is an illustrating view of a concrete example of the optical branches of an optical fiber transmission path in the first example;
Fig. 3 is an illustrating view in the other concrete example of the optical branches of an optical fiber transmission path in the first example;
Fig. 4 is a block diagram showing the construction of a picture image distributing apparatus provided within a passenger moving vehicle in a second example;
Fig. 5 is a block diagram showing the construction of a picture image distributing apparatus provided within a passenger moving vehicle in a third example;
Fig. 6 is a block diagram showing the construction of a picture image distributing apparatus provided within a passenger moving vehicle in a fourth example;
Fig. 7 is a block diagram showing the construction of a picture image distribution apparatus provided within a passenger moving vehicle in accordance with a first embodiment of the present invention;
Fig. 8 is a block diagram showing a modification of the apparatus of Fig. 7; and

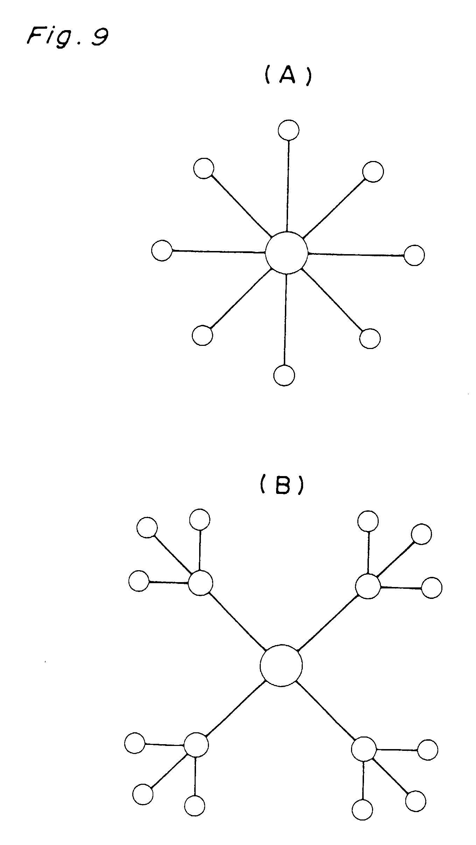

Fig. 9 is a topology view showing the network construction in the construction example of the conventional picture image distributing apparatus provided within the passenger moving vehicle.

Before the description of the present invention proceeds, it is to be noted that like parts are designated by like reference numerals throughout the accompanying drawings.

### (Example 1)

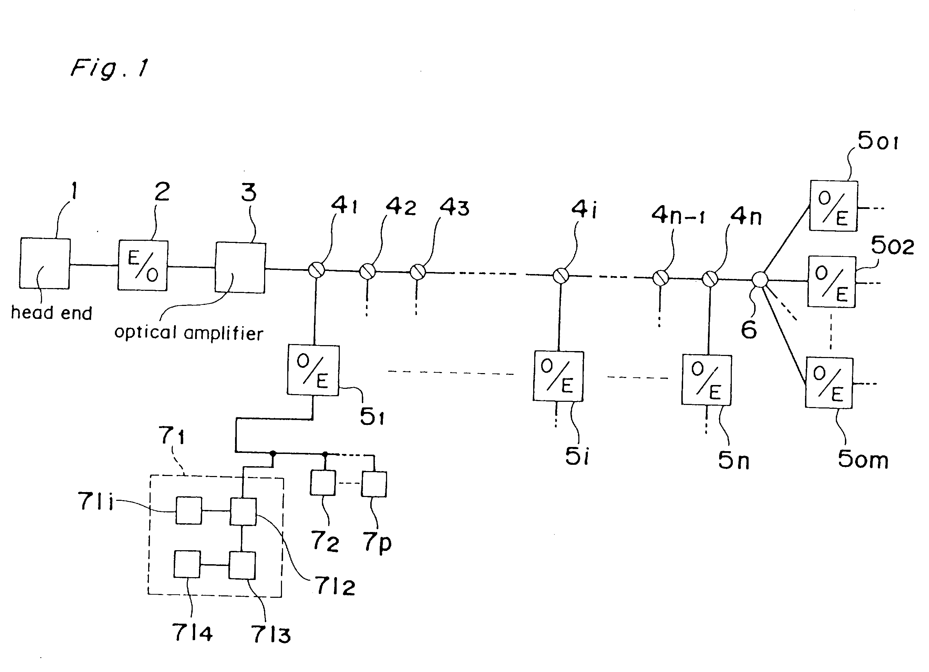

Fig. 1 is a block diagram of a picture image distributing apparatus provided within a passenger moving vehicle in an example 1. The picture image distributing apparatus provided within the passenger moving vehicle is provided with a head end portion 1, an electric optical converting portion (hereinafter referred to as "E/O portion") 2, an optical amplifying portion 3, an optical taps 4₁ through 4ₙ as optical branching units, optical electric converting portions (hereinafter referred to as "O/E portion) 5₁ through 5ₙ, 5ₒ₁ through 5ₒₘ, an optical branching unit 6, a passenger seat picture image terminals 7₁ through 7ₚ. The passenger seat picture image receiving terminals 7₁ through 7ₚ are respectively connected even to the respective O/E portions 5₂ through 5ₙ, 5ₒ₁ through 5ₒₘ except for the O/E portion 5₁ although the drawing is omitted. Each of the passenger seat picture image receiving terminals 7₁ is provided with a selecting channel operation portion for passenger 71₁ as a man-machine interface, a tuning portion 71₂ for tuning selectively the desired channel with the output electric signals of O/E portion 5₁ by controlling of the selecting channel operation portion for passenger 71₁, a demodulation portion 71₃ for demodulating the signals of channel selected in tuning, and a picture image displaying portion 71₄ for displaying the demodulated picture image signals.

The head end portion 1 relates to the picture image signals so as to output electric signals multiplexed in frequency. The E/O portion 2 converts into optical signals the electric signals outputted from the head end portion 1. The optical amplifying portion 3 optically amplifies the optical signals outputted from the E/O portion 2. The optical taps 4₁ through 4ₙ branches the light into the non-equal distribution. The O/E portions 5₁ through 5ₙ, 5ₒ₁ through 5ₒₘ receive the optical signals from the optical taps 4₁ through 4ₙ or the optical branching unit 6 so as to convert them into electric signals. The optical branching unit 6 branches the light into the equal distribution. The passenger seat picture image receiving terminals 7₁ through 7ₚ receive the electric signals from the O/E portions 5₁ through 5ₙ, 5ₒ₁ through 5ₒₘ. An optical fiber transmission path is composed with the optical fibers being connected among the optical amplifying portion 3 and the optical taps 4₁ through 4ₙ, the optical branching unit 6 and the O/E portions 5₁ through 5ₙ, 5ₒ₁ through 5ₒₘ.

The operation will be described hereinafter. The electric signals from the head end portion 1 are converted into the optical signals by the E/O portion 2, are optically amplified by the optical amplifying portion 3, and outputted into the optical fiber transmission path. The optical signals branched by the optical taps 4₁ through 4ₙ are received respectively by the O/E portions 5₁ through 5ₙ, and are converted into electric signals, namely, signals equivalent to the output signals from the head end portion 1. The larger signal of the output optical signals from the optical tap 4ₙ is equally distributed by the optical distributing unit 6, is received respectively by the O/E portions 5ₒ₁ through 5ₒₘ, and is converted into the electric signals. The passenger seat picture image receiving terminals 7₁ through 7ₚ connected to the respective O/E portions 5₁ through 5ₙ, 5ₒ₁ through 5ₒₘ receive the electric signals from the O/E portions 5₁ through 5ₙ, 5ₒ₁ through 5ₒₘ so as to reproduce the picture images.

In the side of passenger seat picture receiving terminals 7₁, a passenger operates the selecting channel operation portion 71₁ to select the picture image program of channel to be received, by which operation the selecting channel operation portion 71₁ is controlled by the inputted signals the tuning portion 71₂ so as to selectively tune the desired channel from the output electric signals of the O/E portion 5₁. The channel signal selected in tuning by the tuning portion 71₂ is demodulated with the demodulating portion 71₃, and the demodulated signals are displayed in reproduction with the picture displaying portion 71₄ so that a passenger can see the picture image program of selected channel.

The number of the optical taps 4₁ through 4ₙ and the branching number of the optical branching units 6 are determined depending upon the level difference between the transmission and reception.

The number of the passenger seat picture image receiving terminals 7₁ through 7ₚ to be connected with the respective O/E portions 5₁ through 5ₙ, 5ₒ₁ through 5ₒₘ depends upon the actual seat arrangement and the electromagnetic environment and is determined individually.

The electric signals, which are related to the picture images and multiplexed in frequency, to be outputted from the head end portion 1 may be one FM-FDM (Frequency Division Multiplexing) signal with, for example, multichannel FM picture image signals being multiplexed in frequency or may be one QAM-FDM signal having the multichannel signals multiplexed in frequency with the respective digital picture image signals being modulated by the QAM system. The tuning and demodulating operations of the channel may be effected by the O/E portions 5₁ through 5ₙ, 5ₒ₁ through 5ₒₘ so as to transmit in a base band signal format the desired picture image signals to the respective passenger seat picture image receiving terminals 7₁ through 7ₚ from the O/E portions 5₁ through 5ₙ, 5ₒ₁ through 5ₒₘ. The tuning and QAM modulating operations of the channel may be effected by the O/E portions 5₁ through 5ₙ, 5ₒ₁ through 5ₒₘ so as to transmit in the digital signal format the desired picture image signals to the respective passenger seat picture image receiving terminals 7₁ through 7ₚ from the O/E portions 5₁ through 5ₙ, 5ₒ₁ through 5ₒₘ. The tuning and QAM demodulating of the channel, and the decode of the digital picture signals may be effected by the O/E portions 5₁ through 5ₙ, 5ₒ₁ through 5ₒₘ so as to transmit in the base band signal format the desired picture image signals to the respective passenger seat picture image receiving terminals 7₁ through 7ₚ from the O/E portions 5₁ through 5ₙ, 5ₒ₁ through 5ₒₘ. Namely, a signal processing function for reproducing the base band picture image signals from the electric signals of the FDM format is roughly divided into the tuning and demodulating operations. When the modulating system is QAM, a processing function of the decode is added to it. Although the three processing functions are taken over by the O/E portions 5₁ through 5ₙ, 5ₒ₁ through 5ₒₘ and the passenger seat picture image receiving terminals 7₁ through 7ₚ, the signal format between the O/E portions 5₁ through 5ₙ, 5ₒ₁, through 5ₒₘ and the passenger seat picture image receiving terminals 7₁ through 7ₚ is determined by the way of the charging operation. The charging way of the processing function is changed by the diversion of the market goods to a module to be used for the respective portions or the new integration of the functions, and is influenced even by the cost, size, suitable connection form.

For instance, when the space for providing the passenger seat picture image receiving terminal 7₁ to 7p within a customer's cabin is limited, it is desirable to give lots of functions as much as possible to the O/E portions 5₁ to 5ₙ, 5₀₁, to 5 ₀ₘ. Also, for instance, if a conventional by used receiver being able to receive and reproduce FM picture image signals is employed of itself, it is preferable for the O/E portions 5₁ to 5ₙ, 5₀₁, to 5₀ₘ to convert the optical signals into electric signals having proper levels to supply the signals onto the passenger seat picture image receiving terminals 7₁ to 7 p in the form of bus.

On the employment of bus form, it may be transmitted the optical signals of themselves to the passenger seat picture image receiving terminals through the O/E portions 5₁ to 5ₙ, 5₀₁, to 5₀ₘ, or to transmit the frequency multiplexed signals converting in frequency to transmitting frequencies allocated respectively to the passenger seat picture image receiving terminals 7₁ to 7p. At this time, each of the passenger seat picture image receiving terminals 7₁ to 7p is enough for receiving only the signal of frequency allocated to itself. In general, it may be shortened the transmitting path adapted as a form of bus.

Although the connection form between the O/E portions 5₁ through 5ₙ, 5ₒ₁ through 5ₒₘ and the passenger seat picture image receiving terminals 7₁ through 7ₚ is a bus type in the above described example 1, the other type such as a star type may be used. Especially if the signal format in the portion is a base band form, a star form is suitable.

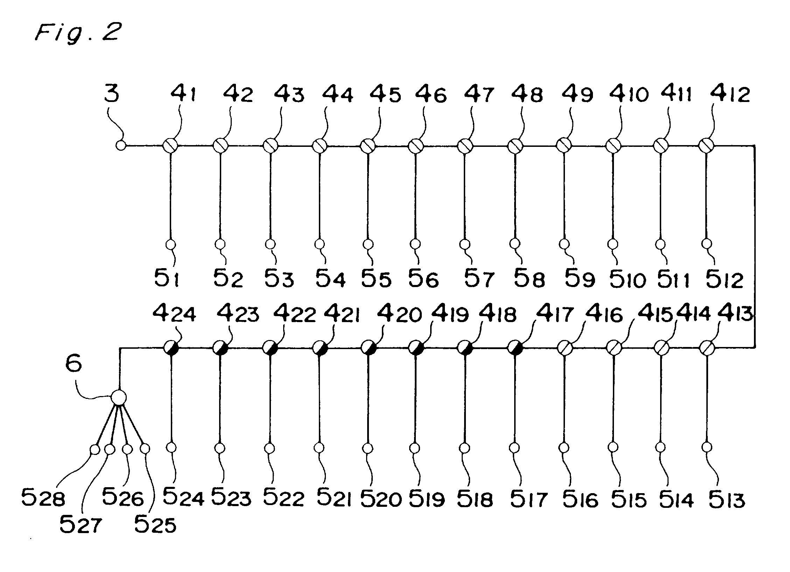

Fig. 2 is an illustrating view in a concrete example of an optical branching operation of the optical fiber transmission path, optical taps 4₁ through 4₁₆ are 20 dB taps, the optical taps 4₁₇ through 4₂₄ are 10 dB taps. The optical branching unit 6 is four branching units. Assume that the loss of the optical taps 4₁ through 4₁₆ which are the 20 dB taps is 22 dB and 0.5 dB including the excess loss, the loss of the optical taps 4₁₇ through 4₂₄ which are 10 dB taps are 11.5 dB and 1 dB including the excessive loss, the loss of per output of the optical branching unit 6 which are 4 branching units is 7 dB including the excess loss . The level difference between the transmission and the reception being 36 dB. An optical connector is provided respectively among the respective optical taps 4₁ through 4₂₄, between the optical taps 4₂₄ and the optical branching unit 6, between the optical tap 4₁ and the optical amplifying portion 3. Assume that the loss thereof is 0.2 dB per one optical connector, and the number of the branches is determined as shown in Fig. 2. Namely, in this example, 28 branches are possible. Assume that four passenger seat picture image receiving terminals 7₁ through 7₄ can be connected respectively with twenty eight O/E portions 5₁ through 5₂₈, and one hundred twelve passenger seat picture receiving terminals can be connected as a whole.

As the types of the components to be used are better to be made less as much as possible in terms of cost and maintenance, three types only are used in the example. As a matter of fact, the number of branches can be increased if more types of optical taps 4₁ through 4ₙ and optical branching units 6 are used in accordance with the optical signal levels of the respective portions. Therefore, the total number of the passenger seat picture image receiving terminals can be increased.

If the branching ratios among the optical taps 4₁ to 4ₙ are proper at the respective positions, the total sum of branchings becomes maximum to be effective, but it needs to prepare many kinds of the optical taps 4₁ to 4ₙ corresponding to the kinds of branching ratios, so that the number of kinds becomes slightly large, and it is necessary to keep always the whole kinds of branchings for exchanging in maintenance at large cost. However, in this example, the number of kinds of branching is limited in practical use without any reduction of the property of itself, and it is rendered to present a merit of cost reduction and easy maintenance. In addition, at the time of installing the apparatus it can be reduced the initial cost for the installation in general.

According to the margin in the representative points, there are 13.8 dB in the input end of the O/E portion 5₁, 6.6 dB in the input end of the O/E portion 5₉, 0.3 dB in the input end of the O/E portion 5₁₆, 9. 9 dB in the input end of the O/E portion 5₁₇, 0.1 dB in the input end of the O/E portion 5₂₄, 3. 2 dB in the input end of the O/E portions 5₂₅ through 5₂₈. As the margin is considerably different in location in this manner, it is possible to further increase the number of the whole branches if the optical signal is branched after branching at the respective optical taps 4, through 4₂₄. The example in this case is shown.

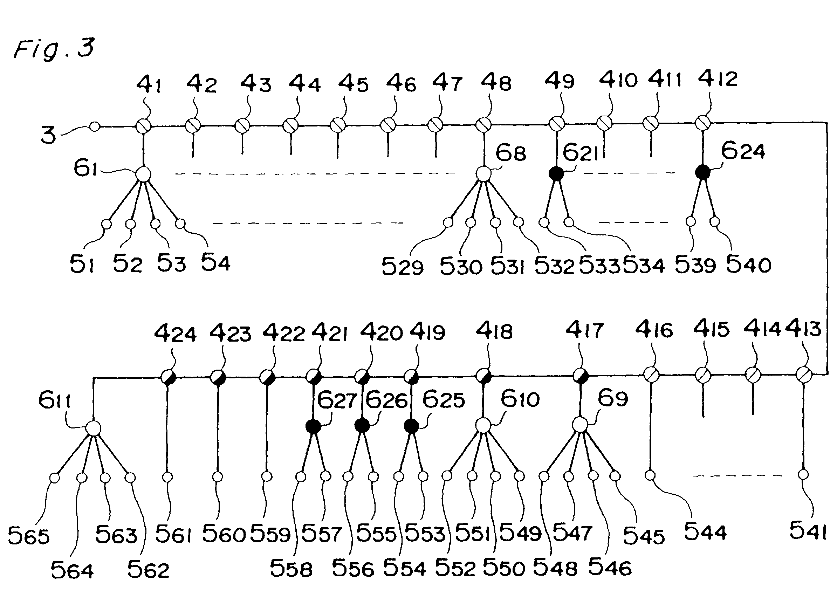

Fig. 3 is an illustrating view in the other concrete example of the optical branches of the optical fiber transmission path. As compared with the example of Fig. 2, optical branching units 6₁ through 6₁₀ composed of four branching units and optical branching units 6₂₁ through 6₂₇ composed of two branching units are added. The loss per output of the optical branching units 6₁ through 6₁₀ composed of four branching units is 7 dB including the excessive loss, the loss per output of the optical branching units 6₂₁ through 6₂₇ composed of two branching units is 3.5 dB including the excessive loss, and the other conditions are the same as in the example shown in Fig. 2.

Optical branching units 6₁ through 6₁₀ are inserted into the rear stage side of the optical taps 4₁ through 4₈, 4₁₇, 4₁₈, and the optical branching units 6₂₁ through 6₂₇ are inserted into the rear stage side of the optical taps 4₉ through 4₁₂, 4₁₉ through 4₂₁, and sixty five branches can be provided. Assume that four passenger seat picture image receiving terminals 7₁ through 7₄ can be connected respectively with sixty five O/E portions 5₁ through 5₆₅, and two hundred sixty passenger seat picture image receiving terminals can be connected as a whole. As the network construction of the optical fiber transmission path becomes correspondingly complicated in the example, such construction may be provided as described hereinabove if possible, in accordance with the actual condition of the optical fiber laying operation.

As mentioned above, by limiting the kinds of branching in connection with the branching ratio of optical taps 4₁ to 4ₙ it may be caused a large dispersion at random for the optical power branched by the respective taps 4₁ to 4ₙ to generate the loss of power. Accordingly, in the example the optical power is branched at the portion having spare power for branching.

Also, it is an advantage to be able to increase the number of branching, while the main line of optical fiber transmission path is not modified. As the net construction of optical fiber transmission path becomes complicated, it is necessary to decide the whole construction of the apparatus on the consideration of merit of increasing the number of branchings and of the problems for space.

### (Example 2)

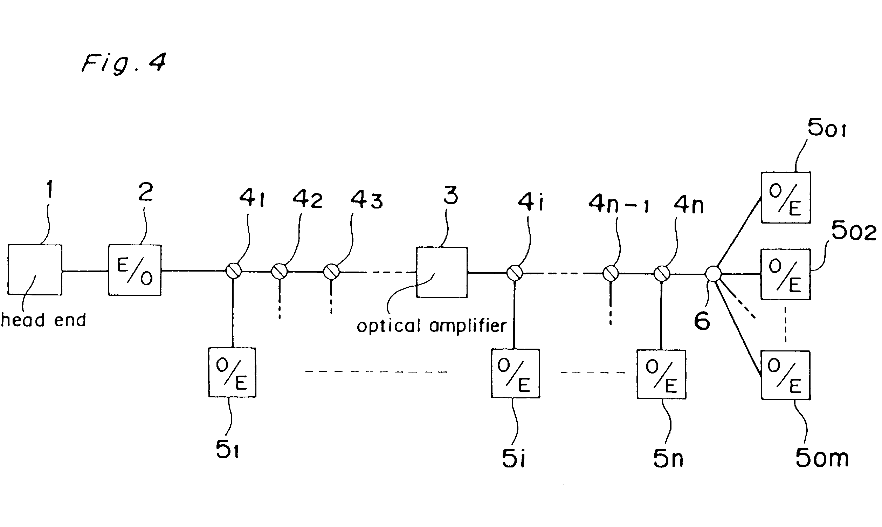

Fig. 4 is a block diagram of a picture image distributing apparatus provided within a passenger moving vehicle in the example 2. As compared with the example 1 shown in Fig. 1, Fig. 4 is different from the construction wherein the optical amplifying portion 3 is provided halfway on the optical fiber transmission path. The passenger seat picture image receiving terminals 7₁ through 7_{P} are omitted in the drawing.

Such construction is adopted when the output of the E/O portion 2 is larger. Especially, the construction is suitable when the output level is too large to place the optical amplifying portion 3 immediately after the E/O portion 2. The inserting position of the optical amplifying portion 3 is determined in the optimum location by the NF characteristics and the gains of the optical amplifying portion 3.

In such construction, two methods of exciting operation are provided when the optical amplifying portion 3 is an optical fiber amplifier. One way is to have an excitation optical power supply in the optical amplifying portion 3, and the other method is to transmit the excitation light till the optical amplifying portion 3 through the transmission path the same in the optical signal from the side of the head end portion 1. There is an advantage that the maintenance becomes easier by the provision of the excitation light source on the side of the head end portion 1. The damping operation of the excitation light can be restrained to minimum if the wavelength dependency where the optical signal is branched, but the excitation light is not branched is adopted in the optical taps 4₁ through 4ₙ.

By employing the optical taps having the property depending on the wavelength, it can be presented advantages such that the optical power for exciting from the light source for optical pumping is used effectively, and the light source for optical pumping is small enough for the output power.

Since the optical power is amplified with providing in halfway of the optical fiber transmission path the optical amplifying portion 3 to amplify the optical power, it is a merit of increasing the number of branching in addition to that, if the optical power is amplified to a proper level, the same type of optical taps as used in the optical fiber transmission path before the optical amplifying portion can be employed even on the proceeding optical fiber transmission path after the optical amplifying portion 3 so that the number of kinds of optical taps can be reduced.

### (Example 3)

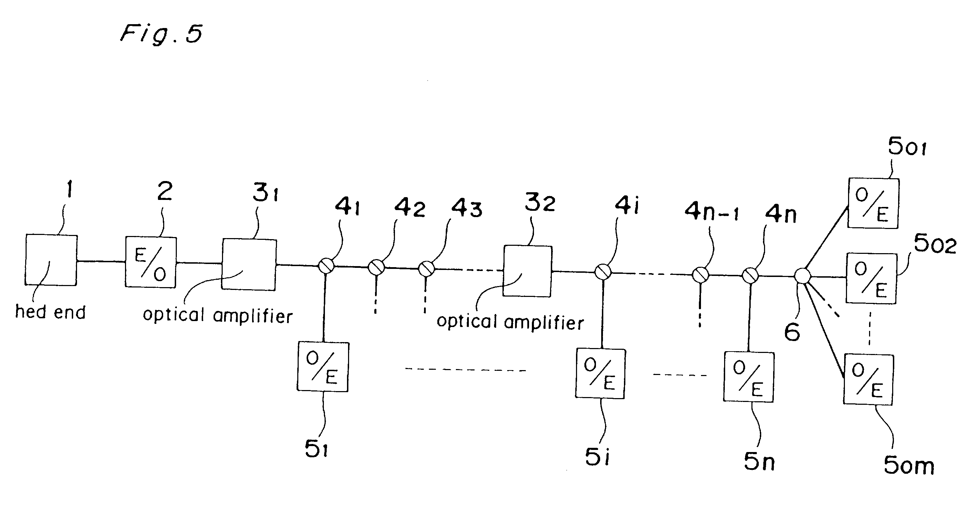

Fig. 5 is a block diagram of a picture image distributing apparatus provided within a passenger moving vehicle in the example 3. Fig. 5 is different from the construction where the optical amplifying portion 3₂ is added as compared with the example 1 shown in Fig. 1. The passenger seat picture image receiving terminals 7₁ through 7ₚ are omitted in the drawing.

Such construction can be adopted when the number of the branches is required to increase more than the example 1. Namely, the optical amplifier portion 3₂ achieves as a function of a repeater. As the optical amplifying portion 3₂ is not noiseless, the number of the repetition stages cannot be increased without limit.

Two exciting methods are provided when the optical amplifying portions 3₁, 3₂ are the optical fiber amplifiers in such construction. One is a method of having an exciting light source, and the other is a method of transmitting the exciting light so far as the optical amplifying portions 3₁, 3₂ through the transmission path the same as in the optical signal from the side of the head end portion 1. As the exciting light source is provided on the side of the head end portion 1, the maintenance has an advantage of becoming easier in operation. If a wavelength dependency where the optical signal is branched, but the exciting light is not branched is adopted in the optical taps 4₁ through 4ₙ, the damping operation of the excitation light can be restrained to minimum.

The third example is a kind of combination of the previous two examples so that it has advantages for increasing the number of branching and for supplying the shortage of the optical output power of E/O portion 2 when it is small.

Also, if the light source for optical pumping, which does not contribute to the optical amplifying within the optical amplifying portion 3₁ among the whole light source for optical pumping of the optical amplifying portion 3₁, is transmitted to the optical amplifying portion 3₂ through the optical fiber transmission path, it can be used effectively as the optical power of the light source for optical pumping. Especially, it is more effective to employ the above-mentioned ones depending upon the property of wavelength to the optical taps 4₁ to 4ₙ.

### (Example 4)

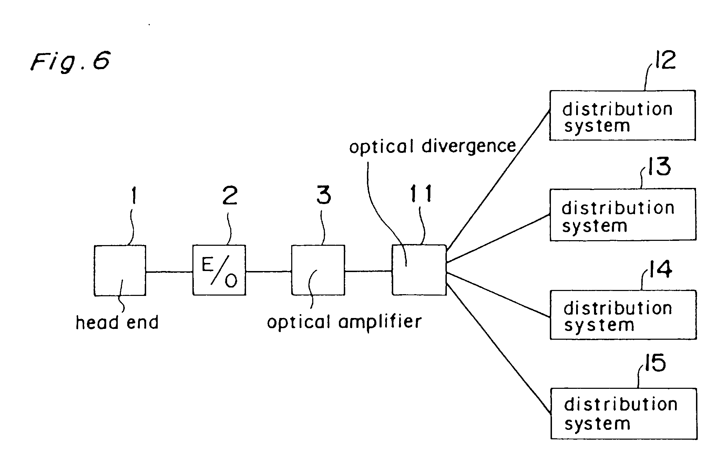

Fig. 6 is a block diagram of a picture image distributing apparatus provided within a passenger moving vehicle in the example 4. The example is adapted to operate in parallel a picture image distributing apparatus provided within a passenger moving vehicle of the above described examples 1 through 3. Namely, the output of the optical amplifying portion 3 is branched by the optical branching unit 11 composed of four branching units so as to feed them to the distributing systems 12 through 15. Each of the distributing systems 12 through 15 is shown in Fig. 2 among the distributing system including the optical fiber transmission path through the passenger seat picture receiving terminals 7₁ through 7_{P} in the picture image distributing apparatus provided within the passenger moving vehicle in the above described example 1.

Such construction assumes a passenger plane having the number of much more passenger seats in a lateral direction and a plurality of optical fibers are laid in parallel for each of the respective seat groups in the longitudinal direction so as to set four systems composed of the distributing systems 12 through 15 in parallel. In such a way, the optical fibers and the electric cables for distribution use can be provided without the laying operation in the lateral direction as much as possible so that the fibers and the electric cables for the distributing use do not stride over the aisles.

In the above described example 4, the output is branched at the rear stage of the optical amplifying portion 3, and may be branched anywhere on the rear stage side from the head potion 1. Although the reliability increases as the branching point is closer to the head end portion 1, the cost increases correspondingly, so that the balance thereof has only to be effected.

Although, in the above described example 4, each of the distributing systems 12 through 15 is shown in Fig. 2 among the distributing systems including from the optical fiber transmission path to the passenger seat picture image receiving terminals 7₁ through 7ₚ in the picture image distributing apparatus provided within the passenger moving vehicle in the above described example 1, each of the distributing systems 12 through 15 may be shown in Fig. 2 among the distributing systems including the passenger seat picture image receiving terminals 7₁ through 7ₚ from the optical fiber transmission path in the picture image distributing apparatus provided within the passenger moving vehicle in the above described example 1 or among the distributing systems included from the optical fiber transmission path in the picture image distributing apparatus provided within the passenger moving vehicle in the above described example 2, or among the distributing systems included from the optical fiber transmission path in the picture image distributing apparatus provided the passenger moving vehicle in the above described example 3 to the passenger picture image receiving terminals 7₁ through 7ₚ.

Generally, the customer's cabins of the passenger moving vehicles of large type are spaced with each other by passages of two or three lines, and the setting up the transmission paths crossing over the passages is not preferable at the points of maintenance and reliability thereof. On the contrary, the serial arrangement in the fourth example has an advantage of providing an arrangement without crossing over the passages, which is useful especially in the case of installing the transmission within the wall. Also, when it can be obtained enough for the optical output from the output of optical amplifying portion, it is branched after the optical amplifying portion and designed in serial arrangement to decrease the number of kinds of the optical taps in addition to that the number of the whole branchings increases, which are advantages for this example.

### (Embodiment 1)

Fig. 7 shows the construction of a picture image distributing apparatus provided within a passenger moving vehicle in accordance with the first embodiment, wherein the same components to those of the previously described examples are designated with the same reference numbers to the previous ones. In this embodiment, the optical output from the first optical amplifying portion 3₁ is branched in two within the branching unit 8₁ to output to the two optical fiber transmission paths. In the first optical fiber transmission path there are a plurality of optical branch units of fusion type having two inputs and two outputs of non-equal distribution 40₁ to 40ₙ₋₁, 40ₙ connected with each other in series, while in the second optical fiber transmission path there are a plurality of optical branch units for fusion type having two inputs and two outputs of non-equal distribution 40ₙ₊₁ to 40ₖ connected with each other in series.

There is provided at the final point of the first optical fiber transmission path an optical coupling portion 8₂ of which output is optically amplified within the second optical amplifying portion 3₂ to input through the optical coupling 8₃ to the final point of the second optical fiber transmission path.

At the final point of the second optical fiber transmission path there provides the optical coupling portion 8₃ of which output is optically amplified within the third optical amplifying portion 3₃ to input the optical coupling portion 8₂ to the final point of the first optical fiber transmission path.

The two optical signals from two outputs of the optical branching units 40₁ are received within the optical electric converting portion 51₁ and 51₂ among the respective optical electric converting portions 500₁ to convert into electric signals. The diversity receiving portion 51₃ is outputted upon selecting the large one of outputs from the optical electric converting portions 51₁ and 51₂. In the diversity receiving portion 51₃ there are connected with the same passenger seat picture image receiving terminals 7₁ to 7 p to those of the previous examples, while the other optical branch units of fusion types are connected with the apparatus having the same construction to those of the previous examples. For instance, it will be explained hereinafter the flow of signals relating to the optical branch units 40₁, which is also applied in the same manner to ones of the other parts. The signals from the head end portion 1 is branched in two by the branch unit 8₁, one output of which being outputted into the first optical fiber transmission path. The portion of the optical signals from the first optical fiber transmission path is taken out by the optical branch unit of fusion type 40₁ to input into the optical electric converting portion 51₂ among the optical electric converting portions 500₁. One of the branch output from the branch unit 8₁ is outputted into the second optical fiber transmission path. The portion of the optical signals from the second optical fiber transmission path is taken out by the optical branch unit of fusion type 40₁ to input into the electric optical converting portion 51₁ among the electric optical converting portions 500₁. The diversity receiving portion 51₃ among the optical electric converting portion 500₁ selects the large one of outputs from the optical electric converting portions 51₁ and 51₂ to output into the passenger seat picture image receiving terminals 7₁ to 7p.

An optical circulator can be employed as the optical coupling 8₂ and 8₃, but, if the loss thereof is admissible, a 3 dB optical branch unit may be employed in order to reduce the cost in easy way. If the polarization of the light wave is constant, it can be employed an optical coupling of property depending on the polarization.

In the first embodiment, the optical branch units of fusion type are received optical signals from the both directions to receive signals of more good quality by means of diversity receiving in addition to that, if one of the optical fiber transmission path causes some problem such as a disconnection not to transmit signals, it can be received signals passing through the other optical fiber transmission path, whereby it can be constructed a transmission system having high reliability.

If it is considered only the point of improving the reliability, it can be designed the system which is adapted to switch only when the trouble is occurred. Namely, when it is normal, it is not necessary to operate the second optical amplifying portion 3₂ and the third optical amplifying portion 3₃, but, when it is occurred some trouble, it is necessary to operate the second optical amplifying portion 3₂ and the third optical amplifying portion 3₃. With such a construction, it can be improved the life of the optical amplifying portion being long, and the reduction of power consumption. The detection of trouble is designed to observe the level or existence of the optical signals at the final point of the optical fiber transmission path, and, if some trouble is occurred, the normal optical signals at the side of optical fiber transmission path is adapted to optically amplified to input into the other optical fiber transmission path in which the trouble is happened. In such a case of that the transmission paths of optical signals are switched at the time of occurrence of trouble, it is not necessary to provide two set of the O/E portion for receiving always two signals from the optical branch units of fusion type. Namely, since the signals are appeared only from the one, if it is designed to input two signal output from the optical branch units of fusion type to the O/E, it is enough for providing only one O/E portion by all means.

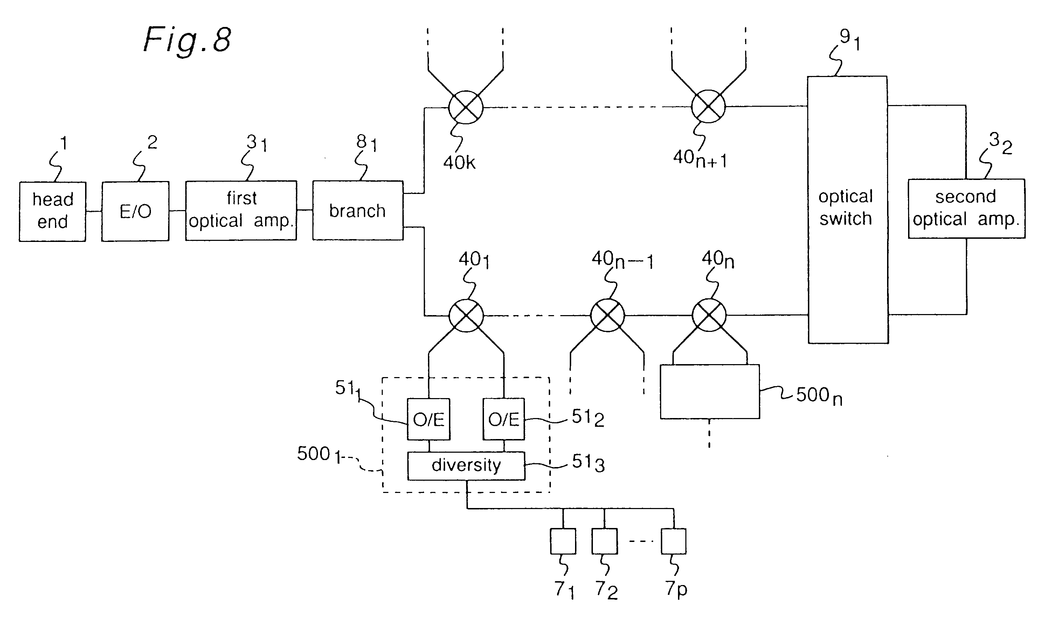

In the construction of Fig. 8, there provides an optical switch portion 9₁ between the second optical amplifying portion 3₂ and the final points of the first and second optical fiber transmission paths so as to change the direction of coupling between the optical fiber transmission path and the input and output directions of the second optical amplifying portion 3₂. The other components are the same to those shown in Fig. 7.

The detection of trouble is designed to observe the level or existence of the optical signals at the final point of the optical fiber transmission path, and, if some trouble is occurred, the normal optical signals at the side of the optical fiber transmission path is inputted into the second optical amplifying portion 3₂ to control the optical switch portion 9₁ so as to input into the other optical fiber transmission path in which the trouble is occurred, and, if the trouble is happened at the opposite side of the optical fiber transmission path, it is necessary to control the optical switch so as to set up the reverse connection, whereby it can be employed only one set of the second optical amplifying portion to reduce the cost.

Also, in the first embodiment the signals are divided in two by the branch unit 8₁, but it can be employed two sets of E/O portions and two sets of optical amplifying portions in such a manner that the outputs from the E/O portions at the upper side are divided in two to employ two sets of the optical amplifying portions, or the output from the head end portion 1 is divided in two to employ two set of the optical amplifying portions. However, the more the signals are divided at the more upper side, the more the number of necessary apparatus are necessary to be influenced to the cost and reliability.

When at least the optical fiber transmission paths and optical branch units are provided within the wall planes or under the floor of the passenger moving vehicle in addition to that the parts disposed after the output point of the optical branch units are provided within the customer's cabins, it is disposed only the optical connectors at the side of cabins at minimum, which is normally connected to the O/E portion or is covered when it is not used.

It is noted that optical components such as an optical fiber are often easily effected by damages or dirt to be directly influenced to the quality of optical signals, and, therefore, it is not preferable to dispose the optical components into air space. Within the passenger moving vehicle it is not preferable to dispose the optical components into the space of passenger seat to be easily effected with damages and dirt. At this point, if the optical fiber transmission paths and optical branch units are located within the wall or under the floor of the passenger moving vehicle, it is only disposed the optical connectors at the sides of customer's cabins so as to be not influenced by damages and dirt.

For the same purpose of that, when the optical fiber transmission paths, optical branch units and optical electric converting portions are installed within the walls or under the floor of the passenger moving vehicle, and the components connected after the output points of the optical electric converting portion is provided within the customer's cabins, it is only disposed the other components having more durability for damages and dirt than the optical components at the side of customer's cabin, so that it can be eliminated the danger for attaching the damages or dirt to the optical components.

## Claims

1. A picture image distributing apparatus provided within a passenger moving vehicle comprising:
a head end portion (1) related to picture image signals and outputting electric signals multiplexed in frequency;
an electric optical converting portion (2) for converting into optical signals the electric signals from the head end portion (1);
a first optical amplifying portion (3₁) for optically amplifying the optical signals from the electric optical converting portion (2), a branching portion (8₁) for dividing into two the optical output from the first optical amplifying portion (3₁),
two lines of optical fiber transmission paths, a first transmission path and a second transmission path, connected with the respective branching portion for transmitting the optical signals from the two outputs of the branching portion (8₁), and connected in series with a plurality of optical branching (40) of fusion type having two inputs and two outputs of non-equal distribution for branching one portion of the optical power of optical signals,
a second optical amplifying portion (3₂) for optically amplifying the optical output from the final point of the first transmission path to input to the final point of the second transmission path,
a third optical amplifying portion (3₃) for optically amplifying the output from the final point of the second transmission path to input to the final point of the first transmission path,
a plurality of optical electric converting portions (5) for receiving the two optical signals outputted from two outputs of the optical branching units (40) to convert into electric signals as to receive in diversity, and
a passenger seat picture image receiving terminal (7) connected electrically by a plurality respectively with the respective optical electric converting portions (5), and receiving the electric signals from the optical electric converting portions (5).

2. A picture image distributing apparatus provided within a passenger moving vehicle comprising:
a head end portion (1) related to picture image signals and outputting the electric signals multiplexed in frequency,
an electric optical converting portion (2) for converting into optical signals the electric signals from the head end portion (1),
a first optical amplifying portion (3₁) for optically amplifying the optical signals from the electric optical converting portion,
a branching portion (8₁) for branching into two the optical output from the first optical amplifying portion (3₁),
two lines of optical fiber transmission paths, a first transmission path and a second transmission path, connected with the respective branching portions for transmitting the optical signals from branching portions, and connected in series with a plurality of optical branching units (40) of fusion type having two inputs and two outputs of non-equal distribution for branching one portion of the optical power of the optical signals,
a second optical amplifying portion (3₂) for optically amplifying the output from the final point of the first transmission path or second transmission path,
an optical switching portion (9₁) for switching from one condition for inputting to the second transmission path the output from the second optical amplifying portion upon inputting to the second optical amplifying portion the output from the final point of the first transmission path to the other condition for inputting to the first transmission path the output from the second optical amplifying portion upon inputting to the second optical amplifying portion the output from the final point of the second transmission path, and vice versa,
a plurality of optical electric converting portions (5) for receiving the two optical signals from two outputs of the optical branching units to convert into electric signals as receiving in diversity, and
a plurality of passenger seat picture image receiving terminals (7) connected electrically by a plurality respectively with the respective optical converting portions (5) and receiving the electric signals from the optical electric converting portions (5).

3. A picture image distributing apparatus provided within a passenger moving vehicle according to claim 1 or 2, wherein the passenger seat picture image receiving terminal (7) comprises a selecting channel operation portion (71) for passenger to be adapted as a man-machine interface, a tuning portion (71₂) for selectively tuning, by controlling the selecting channel operation portion, the desired channel from the output electric signal of the optical electric converting portion, a demodulating portion (71₃) for demodulating the tuning selected channel signal, and a picture image displaying portion (71₄) for displaying the demodulated picture image signal.

4. A picture image distributing apparatus provided within a passenger moving vehicle according to any one of the preceding claims, wherein the head end portion (1) is arranged to output one FM - FDM signal multiplexed in frequency with respect to a multi-channel FM picture image signal.

5. A picture image distributing apparatus provided within a passenger moving vehicle as defined in claim 4, wherein the passenger seat picture image receiving terminal comprises a selecting channel operation portion for passenger to be adapted as a man-machine interface, and a picture image displaying portion for displaying the demodulated base-band picture image signals, the optical electric converting portions being adapted for tuning and demodulating the desired channel by controlling of the selecting channel operation portion, and the desired signal being transmitted as a base-band picture image signal from the optical electric converting portion onto the picture image displaying portion for the respective passenger seat picture image receiving terminal.

6. A picture image distributing apparatus provided within a passenger moving vehicle according to any one of claims 1 to 3, wherein the head end portion (1) is arranged to output one QAM - FDM signal multiplexed in frequency with respect to a multi-channel signal being modulated by the respective digital picture image signal in a QAM system.

7. A picture image distributing apparatus provided within a passenger moving vehicle as defined in claim 6, wherein the passenger seat picture image receiving terminal comprises a selecting channel operation portion for passenger to be adapted as a man-machine interface, a decoding portion for decoding the digital picture image signals QAM demodulated, and a picture image displaying portion for displaying the decoded picture image signal, the optical electric converting portion being adapted for tuning of the desired channel and QAM demodulating by controlling from the selecting channel operation portion, and the desired picture image signal being transmitted as digital picture image signals from the optical electric converting portion to the decoding portions of the respective passenger seat picture image receiving terminals.

8. A picture image distributing apparatus provided within a passenger moving vehicle as defined in claim 6, wherein the passenger seat picture image receiving terminal comprises a selecting channel operation portion to be adapted as a man-machine interface, and a picture image displaying portion for displaying a base-band picture image signal, the optical electric converting portion being adapted for tuning of the desired channel, QAM demodulating, and decoding the digital picture image signal by controlling of the selecting channel operation portion, and the desired signal being transmitted as a base-band picture image signal from the optical electric converting portion to the picture image displaying portion of the respective passenger seat picture image receiving terminals.

9. A picture image distributing apparatus provided within a passenger moving vehicle according to any one of the preceding claims, wherein the or each optical amplifying portion (3) is composed of optical fiber amplifier, the light for excitation is transmitted through an optical fiber transmission path from the head end side to excite the optical amplifying portion.

10. A picture image distributing apparatus provided within a passenger moving vehicle as defined in claim 9, where an optical branching unit (4) is adapted to have a wavelength dependency where the light for excitation is not branched.

11. A picture image distributing apparatus provided within a passenger moving vehicle as defined in any one of the preceding claims, where the number of kinds of the optical branching units (4, 6) are less in construction than the number of the branches.

12. A picture image distributing apparatus provided within a passenger moving vehicle as defined in any one of the preceding claims, wherein at least the transmission paths and optical branching units are located at the wall plane or below the floor of the passenger moving vehicle, and the parts provided after the output point of the optical branching units are located within the customer's cabins of passenger moving vehicle.

## Patentansprüche

1. Bildverteilervorrichtung für ein Passagierbeförderungsfahrzeug, mit:
einem Kopfendeabschnitt (1) zur Aufnahme von Bildsignalen und zur Ausgabe frequenzmultiplexter elektrischer Signale;
einem Elektro/Opto-Wandlerabschnitt (2) zum Wandeln der elektrischen Signale des Kopfendeabschnitts (1) in optische Signale;
einem ersten Optoverstärkerabschnitt (3₁) zum optischen Verstärken der optischen Signale von dem Elektro/Opto-Wandlerabschnitt (2),
einem Abzweigungsabschnitt (8₁) zum Zweiteilen des Optoausgangssignals von dem ersten Optoverstärkerabschnitt (3₁),
zwei Leitungen von Lichtleiterfaser-Übertragungswegen, einem ersten Übertragungsweg und einem zweiten Übertragungsweg, die jeweils mit dem entsprechenden Zweigabschnitt zur Übertragung des optischen Signals von den beiden Ausgängen des Abzweigungsabschnittes (8₁) verbunden sind und in Reihe mit mehreren Optoabzweigungen (40) vom Fusionstyp geschaltet sind, die zwei Eingänge und zwei Ausgänge von ungleicher Verteilung zum Abzweigen eines Teils der Optoleistung optischer Signale aufweisen,
einem zweiten Optoverstärkerabschnitt (3₂) zum optischen Verstärken des Optoausgangssignals von dem Endpunkt des ersten Übertragungsweges, um es dem Endpunkt des zweiten Übertragungsweges zuzuführen,
einem dritten Optoverstärkerabschnitt (3₃) zum optischen Verstärken des Ausgangssignals von dem Endpunkt des zweiten Übertragungsweges, um es dem Endpunkt des ersten Übertragungsweges zuzuführen,
mehreren Opto/Elektro-Wandlerabschnitten (5) zum Empfangen der zwei optischen Signale, die von den zwei Ausgängen der Optoabzweigungseinheiten (40) zum Wandeln in elektrische Signale für einen Mehrfachempfang (Diversityempfang) ausgegeben werden, und einem Passagiersitzplatz-Bildempfangsterminal (7), das elektrisch jeweils mehrfach mit den jeweiligen Opto/Elektro-Wandlerabschnitten (5) verbunden ist und die elektrischen Signale von den Opto/Elektro-Wandlerabschnitten (5) empfängt.

2. Bildverteilervorrichtung für ein Passagierbeförderungsfahrzeug, mit:
einem Kopfendeabschnitt (1) zur Aufnahme von Bildsignalen und zur Ausgabe der frequenzmultiplexten elektrischen Signale,
einem Elektro/Opto-Wandlerabschnitt (2) zum Wandeln der elektrischen Signale des Kopfendeabschnitts (1) in optische Signale,
einem ersten Optoverstärkerabschnitt (3₁) zum optischen Verstärken der optischen Signale von dem Elektro/Opto-Wandlerabschnitt,
einem Abzweigungsabschnitt (8₁) zum Zweiteilen des Optoausgangssignals von dem ersten Optoverstärkerabschnitt (3₁),
zwei Leitungen von Lichtfaser-Übertragungswegen, einem ersten Übertragungsweg und einem zweiten Übertragungsweg, die jeweils mit den entsprechenden Zweigabschnitten zum Übertragen der optischen Signale der Zweigabschnitte verbunden sind und in Reihe mit mehreren Optoabzweigungen (40) vom Fusionstyp geschaltet sind, die zwei Eingänge und zwei Ausgänge von ungleicher Verteilung zum Abzweigen eines Teils der Optoleistung der optischen Signale aufweisen,
einem zweiten Optoverstärkerabschnitt (3₂) zum optischen Verstärken des Ausgangssignals von dem Endpunkt des ersten Übertragungsweges oder zweiten Übertragungsweges,
einem Optoschalterabschnitt (9₁) zum Umschalten von einem Zustand für eine Eingabe des Ausgangssignals von dem zweiten Optoverstärkerabschnitt an den zweiten Übertragungsweg bei einer Eingabe des Ausgangssignals von dem Endpunkt des ersten Übertragungsweges an den zweiten Optoverstärkerabschnitt in den anderen Zustand für eine Eingabe des Ausgangssignals von dem zweiten Optoverstärkerabschnitt an den ersten Übertragungsweg bei einer Eingabe des Ausgangssignals von dem Endpunkt des zweiten Übertragungsweges an den zweiten Optoverstärkerabschnitt sowie umgekehrt,
mehrere Opto/Elektro-Wandler (5) zum Empfang der zwei optischen Signale von zwei Ausgängen der Optoabzweigungseinheiten zum Wandeln in elektrische Signale für einen Mehrfachempfang (Diversityempfang), und
mehrere Passagiersitzplatz-Bildempfangsterminals (7), die elektrisch mittels mehrerer der jeweiligen Opto-Wandlerabschnitte (5) verbunden sind und die elektrischen Signale von den Opto/Elektro-Wandlerabschnitten (5) empfangen.

3. Bildverteilervorrichtung für ein Passagierbeförderungsfahrzeug nach Anspruch 1 oder 2, bei dem das Passagiersitzplatz-Bildempfangsterminal (7) einen Betriebskanal-Wählabschnitt (71) für Passagiere aufweist, der als Mensch/Maschine-Schnittstelle dient, einen Abstimmungsabschnitt (71₂) zur wahlweisen Abstimmung durch ein Ansteuern des Betriebskanal-Wählabschnitts, des gewünschten Kanals von dem elektrischen Ausgangssignal des Opto/Elektro-Wandlerabschnitts, einen Demodulationsabschnitt (71₃) zum Demodulieren des Abstimmungssignals vom ausgewählten Kanal, und ein Bilddarstellungsabschnitt (71₄) zum Darstellen des demodulierten Bildsignales.

4. Bildverteilervorrichtung für ein Passagierbeförderungsfahrzeug nach einem der vorstehenden Ansprüche, bei dem der Kopfendeabschnitt (1) zur Ausgabe eines bezüglich eines Mehrkanal-FM-Bildsignals frequenzmultiplexten FM - FDM-Signals angeordnet ist.

5. Bildverteilervorrichtung für ein Passagierbeförderungsfahrzeug nach Anspruch 4, bei dem das Passagiersitzplatz-Bildempfangsterminal einen als Mensch/Maschine-Schnittstelle dienenden Passagier-Betriebskanal-Wählabschnitt aufweist, und einen Bilddarstellungsabschnitt zum Darstellen des demodulierten Basisband-Bildsignals, wobei die Opto/Elektro-Wandlerabschnitte zum Abstimmen und zum Demodulieren des gewünschten Signals durch Ansteuern des Betriebskanal-Wählabschnitts angepaßt sind, und das gewünschte Signal als Basisband-Bildsignal von dem Opto/Elektro-Wandlerabschnitt zum Bilddarstellungsabschnitt für das jeweilige Passagiersitzplatz-Bildempfangsterminal übertragen wird.

6. Bildverteilervorrichtung für ein Passagierbeförderungsfahrzeug nach einem der Ansprüche 1 bis 3, bei dem der Kopfendeabschnitt (1) zur Ausgabe eines QAM - FDM-Signals angeordnet ist, das bezüglich eines Mehrkanalsignals frequenzmultiplext ist und durch das jeweilige digitale Bildsignal in einem QAM-System moduliert wird.

7. Bildverteilervorrichtung für ein Passagierbeförderungsfahrzeug nach Anspruch 6, bei dem das Passagiersitzplatz-Bildempfangsterminal einen als Mensch/Maschine-Schnittstelle dienenden Passagier-Betriebskanal-Wählabschnitt aufweist, einen Decodierabschnitt zum Decodieren des QAM-demodulierten digitalen Bildsignals, und einem Bilddarstellungsabschnitt zum Darstellen des decodierten Bildsignals, wobei der Opto/Elektro-Wandlerabschnitt für ein Abstimmen des gewünschten Kanals und QAM-Demodulieren durch Ansteuern von dem Betriebskanal-Wählabschnitt eingerichtet ist, und das gewünschte Bildsignal als digitales Bildsignal von dem Opto/Elektro-Wandlerabschnitt an die Decodierabschnitte des jeweiligen Passagiersitzplatz-Bildempfangsterminals übertragen wird.

8. Bildverteilervorrichtung für ein Passagierbeförderungsfahrzeug nach Anspruch 6, bei dem das Passagiersitzplatz-Bildempfangsterminal einen als Mensch/Maschine-Schnittstelle dienenden Betriebskanal-Wählabschnitt aufweist und einen Bilddarstellungsabschnitt zum Darstellen eines Basisband-Bildsignals, wobei der Opto/Elektro-Wandlerabschnitt für ein Abstimmen des gewünschten Kanals, QAM-Demodulieren und Decodieren des digitalen Bildsignals durch Ansteuern des Betriebskanal-Wählabschnitts eingerichtet ist und das gewünschte Signal als ein Basisband-Bildsignal von dem Opto/Elektro-Wandlerabschnitt an den Bilddarstellungsabschnitt des jeweiligen Passagiersitzplatz-Bildempfangsterminals übertragen wird.

9. Bildverteilervorrichtung für ein Passagierbeförderungsfahrzeug nach einem der vorstehenden Ansprüche, bei dem der oder jeder Optoverstärkerabschnitt (3) aus einem Lichtleiterfaserverstärker aufgebaut ist, das Licht zum Anregen durch einen Lichtleiterfaser-Übertragungsweg von der Kopfendeseite übertragen wird, um den Optoverstärkerabschnitt anzuregen.

10. Bildverteilervorrichtung für ein Passagierbeförderungsfahrzeug nach Anspruch 9, in dem eine Optoabzweigungseinheit (4) auf eine Wellenlängen-Abhängigkeit angepaßt ist, bei der das Licht zum Anregen nicht aufgeteilt wird.

11. Bildverteilervorrichtung für ein Passagierbeförderungsfahrzeug nach einem der vorstehenden Ansprüche, bei dem konstruktionsgemäß die Anzahl der Arten von Optoabzweigungseinheiten (4, 6) geringer ausfällt als die Anzahl der Abzweigungen.

12. Bildverteilervorrichtung für ein Passagierbeförderungsfahrzeug nach einem der vorstehenden Ansprüche, bei dem wenigstens die Übertragungswege und Optoabzweigungseinheiten an der Wandebene oder unterhalb des Bodens des Passagierbeförderungsfahrzeuges angeordnet sind und die Teile, die dem Ausgabepunkt der Optoabzweigungseinheiten nachgeordnet sind, in den Passagierkabinen des Passagierbeförderungsfahrzeuges plaziert sind.

## Revendications

1. Dispositif de distribution d'images de film prévu à l'intérieur d'un véhicule transportant des passagers comprenant :
une partie de tête de câble (1) reliée à des signaux d'images de film et fournissant en sortie des signaux électriques multiplexés en fréquence,
une partie de conversion électro-optique (2) destinée à convertir en signaux optiques les signaux électriques provenant de la partie de tête de câble (1),
une première partie d'amplification optique (3₁) destinée à amplifier optiquement les signaux optiques provenant de la partie de conversion électro-optique (2), une partie de dérivation (8₁) destinée à diviser en deux la sortie optique provenant de la première partie d'amplification optique (3₁),
deux lignes de voies de transmission à fibre optique, une première voie de transmission et une seconde voie de transmission, reliées à la partie de dérivation respective afin de transmettre les signaux optiques provenant des deux sorties de la partie de dérivation (8₁), et reliées en série à une pluralité de dérivations optiques (40) du type à fusion comportant deux entrées et deux sorties de distribution inégale afin de dériver une partie de la puissance optique des signaux optiques,
une seconde partie d'amplification optique (3₂) destinée à amplifier optiquement la sortie optique provenant du point final de la première voie de transmission afin de l'appliquer en entrée au point final de la seconde voie de transmission,
une troisième partie d'amplification optique (3₃) destinée à amplifier optiquement la sortie provenant du point final de la seconde voie de transmission afin de l'appliquer en entrée au point final de la première voie de transmission,
une pluralité de parties de conversion opto-électrique (5) destinées à recevoir les deux signaux optiques fournis en sortie à partir des deux sorties des unités de dérivation optique (40) afin de les convertir en signaux électriques de manière à les recevoir en diversité, et
un terminal de réception d'images de film de siège de passager (7) relié électriquement, en une pluralité, respectivement, aux parties de conversion opto-électrique (5) respectives, et recevant les signaux électriques provenant des parties de conversion opto-électrique (5).

2. Dispositif de distribution d'images de film prévu à l'intérieur d'un véhicule transportant des passagers comprenant :
une partie de tête de câble (1) reliée à des signaux d'images de film et fournissant en sortie des signaux électriques multiplexés en fréquence,
une partie de conversion électro-optique (2) destinée à convertir en signaux optiques les signaux électriques provenant de la partie de tête de câble (1),
une première partie d'amplification optique (3₁) destinée à amplifier optiquement les signaux optiques provenant de la partie de conversion électro-optique,
une partie de dérivation (8₁) destinée à dériver en deux la sortie optique provenant de la première partie d'amplification optique (3₁),
deux lignes de voies de transmission à fibre optique, une première voie de transmission et une seconde voie de transmission, reliées aux parties de dérivation respectives afin de transmettre les signaux optiques provenant des parties de dérivation, et reliées en série à une pluralité d'unités de dérivation optique (40) du type à fusion comportant deux entrées et deux sorties de distribution inégale afin de dériver une partie de la puissance optique des signaux optiques,
une seconde partie d'amplification optique (3₂) destinée à amplifier optiquement la sortie provenant du point final de la première voie de transmission ou de la seconde voie de transmission,
une partie de commutation optique (9₁) desitinée à se commuter depuis une première condition consistant à appliquer en entrée à la seconde voie de transmission la sortie provenant de la seconde partie d'amplification optique lors de l'application en entrée à la seconde partie d'amplification optique de la sortie provenant du point final de la première voie de transmission, vers l'autre condition consistant à appliquer en entrée à la première voie de transmission la sortie provenant de la seconde partie d'amplification optique lors de l'application en entrée à la seconde partie d'amplification optique de la sortie provenant du point final de la seconde voie de transmission, et vice versa,
une pluralité de parties de conversion opto-électrique (5) destinées à recevoir les deux signaux optiques provenant de deux sorties des unités de dérivation optique afin de les convertir en signaux électriques reçus en diversité, et
une pluralité de terminaux de réception d'images de film de sièges de passagers (7) reliés électriquement, en une pluralité respectivement, aux parties de conversion opto-électrique respectives (5), et recevant les signaux électriques à partir des parties de conversion opto-électrique (5).

3. Dispositif de distribution d'images de film prévu à l'intérieur d'un véhicule transportant des passagers selon la revendication 1 ou 2, dans lequel le terminal de réception d'images de film de siège de passager (7) comprend une partie d'actionnement de sélection de canal (71) pour passager destinée à être utilisée comme interface homme-machine, une partie d'accord (71₂) destinée à accorder de façon sélective, grâce à une commande de la partie d'actionnement de sélection de canal, le canal souhaité à partir du signal électrique de sortie de la partie de conversion opto-électrique, une partie de démodulation (71₃) destinée à démoduler le signal de canal sélectionné accordé, et une partie d'affichage d'images de film (71₄) destinée à afficher le signal d'images de film démodulé.

4. Dispositif de distribution d'images de film prévu à l'intérieur d'un véhicule transportant des passagers selon l'une quelconque des revendications précédentes, dans lequel la partie de tête de câble (1) est agencée pour fournir en sortie un signal de multiplexage par répartition en fréquence avec modulation de fréquence (FM-FDM), multiplexé en fréquence par rapport à un signal d'images de film en modulation de fréquence multicanal.

5. Dispositif de distribution d'images de film prévu à l'intérieur d'un véhicule transportant des passagers selon la revendication 4, dans lequel le terminal de réception d'images de film de siège de passager comprend une partie d'actionnement de sélection de canal pour passager destinée à être utilisée en tant qu'interface homme-machine, et une partie d'affichage d'images de film destinée à afficher les signaux d'image de film en bande de base démodulés, les parties de conversion opto-électrique étant conçues pour accorder et démoduler le canal désiré grâce à une commande de la partie d'actionnement de sélection de canal, et le signal désiré étant transmis sous forme d'un signal d'images de film en bande de base à partir de la partie de conversion opto-électrique jusque vers la partie d'affichage d'images de film du terminal de réception d'images de film de siège de passager respectif.

6. Dispositif de distribution d'images de film prévu à l'intérieur d'un véhicule transportant des passagers selon l'une quelconque des revendications 1 à 3, dans lequel la partie de tête de câble (1) est conçue pour fournir en sortie un signal de multiplexage par répartition en fréquence à modulation d'amplitude en quadrature, multiplexés en fréquence par rapport à un signal multicanal qui est modulé par le signal d'images de film numérique respectif dans un système à modulation d'amplitude en quadrature (QAM).

7. Dispositif de distribution d'images de film prévu à l'intérieur d'un véhicule transportant des passagers selon la revendication 6, dans lequel le terminal de réception d'images de film de siège de passager comprend une partie d'actionnement de sélection de canal pour passager destinée à être utilisée comme interface homme-machine, une partie de décodage destinée à décoder les signaux d'image de film numérique démodulés en modulation d'amplitude en quadrature, et une partie d'affichage d'images de film destinée à afficher le signal d'images de film décodé, la partie de conversion opte-électrique étant conçue pour accorder le canal désiré et la démodulation en quadrature (QAM) grâce à une commande à partir de la partie d'actionnement de sélection de canal, et le signal d'images de film désiré étant transmis sous forme de signaux d'images de film numériques à partir de la partie de conversion opto-électrique vers les parties de décodage des terminaux de réception d'images de film de sièges de passagers respectifs.

8. Dispositif de distribution d'images de film prévu à l'intérieur d'un véhicule transportant des passagers selon la revendication 6, dans lequel le terminal de réception d'images de film de siège de passager comprend une partie d'actionnement de sélection de canal destinée à être utilisée comme interface homme-machine, et une partie d'affichage d'images de film destinée à afficher un signal d'image de film en bande de base, la partie de conversion opto-électrique étant conçue en vue de l'accord du canal désiré, de la démodulation QAM, et du décodage du signal d'image de film numérique grâce à une commande de la partie d'actionnement de sélection de canal, et le signal désiré étant transmis sous forme d'un signal d'image de film en bande de base à partir de la partie de conversion opto-électrique vers la partie d'affichage d'images de film des terminaux de réception d'images de film de sièges de passagers respectifs.

9. Dispositif de distribution d'images de film prévu à l'intérieur d'un véhicule transportant des passagers selon l'une quelconque des revendications précédentes, dans lequel la ou chaque partie d'amplification optique (3) est composée d'un amplificateur à fibre optique, la lumière destinée à l'excitation est transmise par l'intermédiaire d'une voie de transmission à fibre optique depuis le côté de tête de câble afin d'exciter la partie d'amplification optique.

10. Dispositif de distribution d'images de film prévu à l'intérieur d'un véhicule transportant des passagers selon la revendication 9, dans lequel une unité de dérivation optique (4) est conçue pour présenter une dépendance vis-à-vis de la longueur d'onde lorsque la lumière destinée à l'excitation n'est pas dérivée.

11. Dispositif de distribution d'images de film prévu à l'intérieur d'un véhicule transportant des passagers selon l'une quelconque des revendications précédentes, dans lequel le nombre des types des unités de dérivation optique (4, 6) est inférieur par conception au nombre des dérivations.

12. Dispositif de distribution d'images de film prévu à l'intérieur d'un véhicule transportant des passagers selon l'une quelconque des revendications précédentes, dans lequel au moins les voies de transmission et les unités de dérivation optique sont situées au niveau du plan de paroi ou bien au-dessous du plancher du véhicule transportant des passagers, et les parties prévues après le point de sortie des unités de dérivation optique sont situées à l'intérieur des cabines des usagers du véhicule transportant des passagers.
